# EUROPEAN PATENT APPLICATION

(11) **EP 1 777 945 A1**
(43) Date of publication of application: **25.04.2007**
(21) Application number: 05109850.7
(22) Date of filing: 21.10.2005
(51) Int. Cl.: H04N 5/44

(54) **Radio receiving system and method for searching radio signals**

(71) Applicant: Mitac Technology Corp., Hsin-Chu, Hsien (TW)
(72) Inventor: Fan, Yung-Kang, BanQiao City, Taipei County (TW)
(74) Representative: Patentanwälte Kewitz & Kollegen

(57) **Abstract**

A system for receiving radio signals and a method for searching radio signals. The system includes a satellite receiver, a look-up table, and a radio signal receiver. The satellite receiver receives satellite signals, and provides position information according thereto. The look up table stores a relationship between the position information and the corresponding frequencies of radio signals. The radio receiver includes a processor which searches the look-up table to locate frequencies corresponding to the position information, whereby the radio receiver receives radio signals accordingly.

## Description

### BACKGROUND

The invention relates to radio communication, and more particularly, methods of receiving television signals.

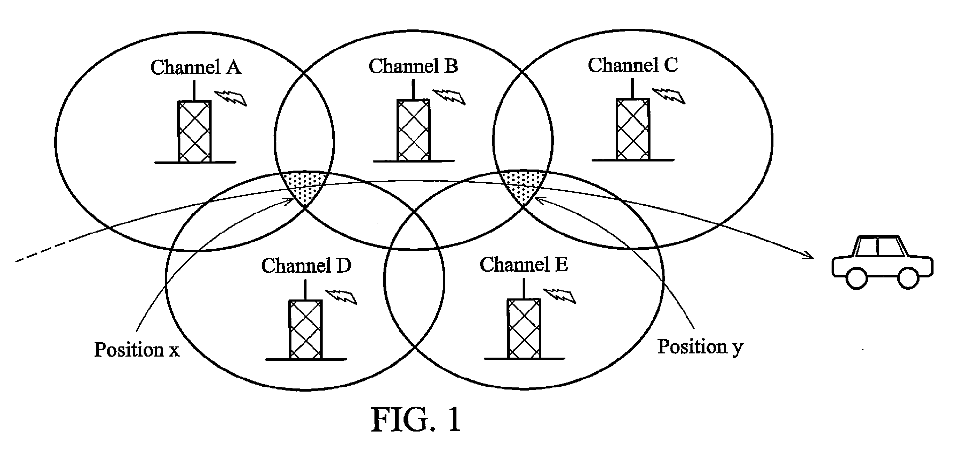

Conventional digital television (DTV) receiver must scan an entire frequency band to locate active frequencies, an inconvenient method for mobile users. When relocating, the entire frequency band must be rescanned to locate another active frequency. Fig. 1 shows an example of different broadcasting ranges, in which frequency a carries program A, frequency b carries program B, and so on. At position x, channels A, B and D are available, while at position y, it's channels B, C and E that are available. Moving from position x to position y while tuned to channel B, does not affect reception of channel B. However, if tuned to channel A while moving from position x to y, reception is interrupted, requiring resetting the television receiver to scan the entire frequency band to find other channels. In conventional scan techniques, re-scanning the whole frequency bands can takes several minutes.

### SUMMARY

Accordingly, the invention provides a system and method for rapid re-acquisition of a TV channel when moving. The system comprises a satellite receiver, a look-up table and a radio receiver. The satellite receiver receives a satellite position signal comprising position information. The look-up table stores pre-set frequencies corresponding to position information. The radio receiver searches the look-up table according to the position information to obtain the frequency, and tunes thereto.

A method for searching frequency comprises providing a current position, providing a look-up table, wherein the look-up table stores pre-set frequency corresponding to current position, and searching the look-up table to obtain the frequency corresponding to current position.

### BRIEF DESCRIPTION OF THE DRAWINGS

Fig. 1 shows an example of television broadcasting ranges;
Fig.2 is a block diagram of a radio receiving system according to an embodiment of the invention; and
Fig. 3 is a flowchart of a method of locating radio signals according to an embodiment of the invention.

### DETAILED DESCRIPTION

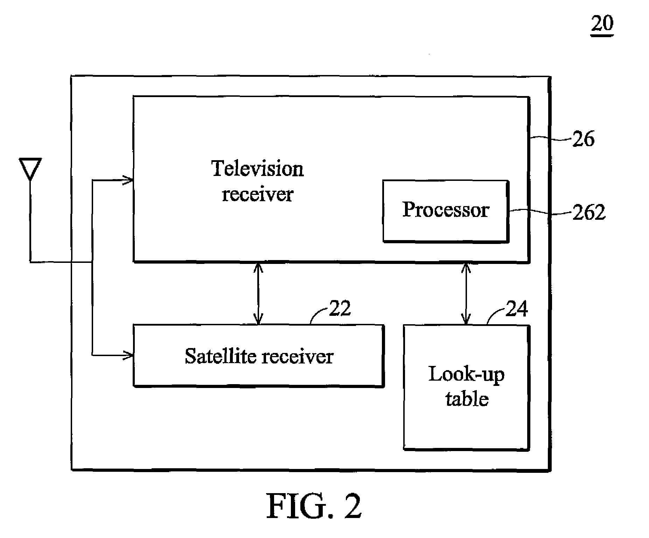

Fig.2 is the block diagram of a radio receiving system 20 according to an embodiment of the invention. The radio receiving system 20 comprises a satellite receiver 22, a look-up table 24, and a television receiver 26. The satellite receiver 22 receives satellite position signals comprising position information. In an embodiment of the invention, the satellite signal is a Global Positioning System (GPS) signal. The satellite position signals may also be Galileo system signals. The look-up table 24 lists positions and corresponding active frequencies. The television receiver 26 comprises a processor 262. The processor 262 looks up the look-up table 24 according to the position information provided by the satellite receiver 22. The processor 262 selects a active frequency, and the television receiver tunes thereto. The radio receiving system of the invention can further be applied to other types of radio communication, including audio and text signals.

Table 1 shows part of a look-up table according to an embodiment of the invention. The look-up table comprises at least two columns, recording relationships between position information and available frequencies of the position, wherein the position information comprises longitude and latitude.

**Table 1**

| Position information (longitude, latitude) | Frequencies of Television Programs(kHz) |
|---|---|
| Position x (E₁, N₁) | 55, 57, 60 |
| Position y (E₂, N₂) | 57, 62, 65 |
| Position w (W₁, S₁) | 40,42,44 |
| ... | ... |

When location changes, the processor 262 reexamines the look-up table 24. For example, if position x is left while tuned to frequency 55kHz, upon arrival at position y, the processor 262 reexamines the look-up table 24, and re-acquires active frequencies to which television receiver 26 thus.

The radio receiving system 20 can receive digital television signals including Advanced Television Systems Committee (ATSC), Digital Video Broadcasting (DVB) and Terrestrial Integrated Services Digital Broadcasting (ISDB-T) signals.

The radio receiving system 20 can further be mounted in a set top box, in a vehicle, or on mobile equipment such as laptop, PDA, mobile phone, or other devices.

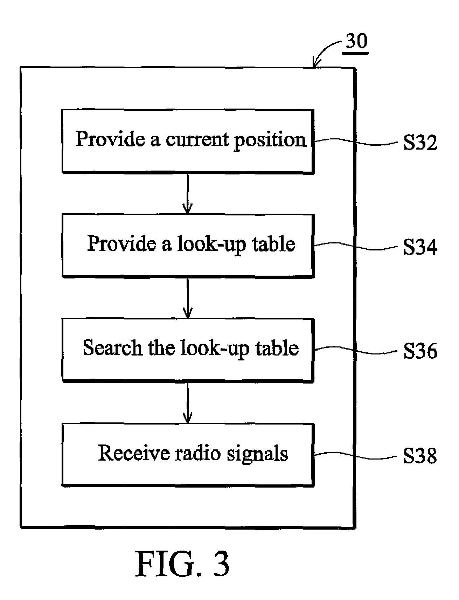

Fig. 3 is a flowchart of a method of locating radio signals according to an embodiment of the invention. First, a satellite receiver provides position information about a current location, in step S32. Next, in step S34, a look-up table stores corresponding frequencies and positions. In step 36, a processor searches a look-up table to find the frequency corresponding to current location. Finally, a television receiver receives radio signals according to the frequency, in step S38. The method can also be applied to other types of radio communication, including audio and text signals. Besides, the method can receive digital television signals including Advanced Television Systems Committee (ATSC), Digital Video Broadcasting (DVB) and Terrestrial Integrated Services Digital Broadcasting (ISDB-T) signals.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A system for receiving radio signals, comprising:
a satellite receiver receiving a satellite position signal, comprising position information;
a look-up table storing frequencies corresponding to the position information; and
a radio receiver comprising a processor, searching the look-up table according to the position information to obtain a frequency corresponding to the position information, and receiving radio signals according to the frequency.

2. The system as claimed in claim 1, wherein the radio receiver is a television receiver.

3. The system as claimed in claim 2, wherein the television receiver receives digital television signals.

4. The system as claimed in claim 2, wherein the television signals is ATSC or DVB signals.

5. The system as claimed in claim 1, wherein the system is mounted on a set top box or mobile equipment.

6. The system as claimed in claim 5, wherein the mobile equipment is a transportation, laptop, or handheld electronics device.

7. The system as claimed in claim 1, wherein the satellite position signal is a Global Positioning System (GPS) signal or a Galileo system signal.

8. The system as claimed in claim 1, wherein the processor searches the look-up table when position information is changed.

9. A method for searching radio signals, comprising:
providing a current position;
providing a look-up table, storing a frequency corresponding to the current position position; and
searching the look-up table to obtain the frequency corresponding to the current position.

10. The method as claimed in claim 9, wherein the radio signals are television signals.

11. The method as claimed in claim 10, wherein the television signals are digital television signals.

12. The method as claimed in claim 9, wherein providing the current position comprises receipt of a satellite position system signal by a satellite receiver.

13. The method as claimed in claim 12, wherein the satellite position system is a Global Positioning System (GPS) or a Galileo system.
